# EUROPEAN PATENT SPECIFICATION

(11) **EP 2 039 579 B1**
(45) Date of publication and mention of the grant of the patent: **24.12.2014**
(21) Application number: 08722244.4
(22) Date of filing: 17.03.2008
(51) Int. Cl.: B61B 13/00, B65G 47/52

(54) **TRUCK TYPE TRANSFER FACILITIES**
FLURFÖRDERZEUGANLAGEN
INSTALLATIONS DE TRANSFERT DE TYPE CAMION

(30) Priority: 27.03.2007 JP 2007081002
(43) Date of publication of application: 25.03.2009
(73) Proprietor: DAIFUKU CO., LTD., Osaka-shi Osaka 555-0012 (JP)
(72) Inventor: SUGIMOTO, Katsuhiro, Gamo-gun Shiga 529-1662 (JP)
(74) Representative: Hoffmann Eitle
(86) International application number: PCT/JP2008/054849
(87) International publication number: WO 2008/120565

(56) References cited:
- DE-C- 363 256
- DE-C- 384 230
- JP-A- 05 039 029
- JP-A- 08 002 407
- JP-A- 59 032 558
- JP-A- 2004 299 538
- JP-A- 2006 241 686
- JP-U- H0 266 803
- JP-U- 54 059 603
- JP-U- 59 156 007

## Description

### [Technical Field]

The present invention relates to a carriage-type conveyance system using a conveyance carriage which travels on guide rails laid on a floor surface along a conveyance path.

### [Background Art]

In such a carriage-type conveyance system, when a floor surface aisle crossing section is included in the conveyance path, generally, to allow a vehicle, etc. , traveling on the floor surface aisle crossing section to safely and easily get over the guide rails on the conveyance path side, a crossing aisle floor member is laid to be flush with the upper surfaces of the guide rails and slopes for eliminating level differences from the floor surface are formed on both ends of the crossing aisle floor member although patent documents disclosing this construction cannot be presented.

JP 54 059603 U and JP-A-2006 241 686 A disclose a carriage-type conveyance system according to the preamble of claim 1.

### [Disclosure of the Invention]

### [Problem to be Solved by the Invention]

As described above, in the conventional construction in which a crossing aisle floor member having slopes on both ends is laid on the floor surface, not only is extra labor required to move a handcart or the like on the crossing aisle but also the safety is lowered in comparison with a flat floor surface on which no guide rails are laid.

### [Means for Solving the Problem]

An object of the present invention is to provide a carriage-type conveyance system which can solve the conventional problem described above.

This object is achievedby a carriage-type conveyance system according to claim 1.

According to the carriage-type conveyance system of the present invention, although the conveyance carriage can be made to smoothly travel at a predetermined level via the elevating guide rails raised to the raised level when the conveyance carriage passes through the aisle crossing section, the elevating guide rails are lowered to the lowered level when the conveyance carriage does not travel on the aisle crossing section, and accordingly, a flat crossing aisle flush with the floor surface around it is formed by the floor member covering the pit and the upper surfaces of the elevating guide rails at the lowered level, so that a handcart, etc., can be safely moved on this crossing aisle without extra labor.

Furthermore, there is no possibility that the conveyance carriage is made to enter the aisle crossing section by mistake in the state that the elevating guide rails disposed on the aisle crossing section are lowered to the lowered level, so that the safety can be increased.

Preferred optional features are recited in the dependent claims.

In detail, it is possible that the conveyance carriage is provided with at least four guided portions at appropriate intervals in the traveling direction, and on the conveyance paths before and after the aisle crossing section, conveyance carriage guide rails which engage with the guided portions are laid so that at least two of the guided portions always engage with the conveyance carriage guide rails when the conveyance carriage passes through the aisle crossing section.

According this aspect, even without using flanged wheels that engage with guide rails as wheels of the conveyance carriage, the orientation of the conveyance carriage to pass through the crossing aisle can be reliably restricted and the conveyance carriage can be prevented from unexpectedly deviating from the conveyance path when passing through the crossing aisle.

Further, it is possible that the elevating drive devices are constituted by elevating support means and drive means, and the elevating support means is disposed at least at two positions before and after the elevating guide rails in the longitudinal direction, and is constituted each by cam rails provided on either a movable body movable in the longitudinal direction of the corresponding elevating guide rail below the elevating guide rail or the elevating guide rail, and a cam follower roller provided on the other, and the drive means is constructed so as to reciprocate the movable bodies of the elevating support means in conjunction with each other.

According to the construction described in this aspect, it is only required that below the elevating guide rails lowered to the lowered level, a space which allows the movable bodies having cam rails or cam follower rollers to move in the longitudinal direction of the elevating guide rails is secured, so that the depth of the pit that must be formed by digging down into the floor surface at the aisle crossing section can be made comparatively shallow.

In this case, the elevating guide rail may be provided with an elevating guide unit parallel, and a pair of left and right cam follower rollers may be axially supported concentrically on both left and right sides of the elevating guide rail, and the elevating guide unit may be provided at least two positions before and after in the longitudinal direction of the elevating guide rail, and has a pair of left and right slide guides sandwiching the elevating guide rail, and each elevating support means is provided with elevating guide rollers and elevating guide members, and the pair of elevating guide rollers are axially supported on the left and right concentrically with the cam follower rollers on the outer sides of the pair of left and right cam follower rollers, a pair of left and right elevating guide members are provided parallel so that the pair of left and right guide rollers engage with these movably vertically, and the movable body is disposed between the pair of left and right elevating guide members, and on the movable body, a pair of left and right cam rails which support the pair of left and right cam follower rollers, respectively, are laid.

According to the construction described in this aspect, the elevating guide rails can be smoothly moved vertically parallel while movements and falling in the left and right lateral direction and movements in the longitudinal direction of the elevating guide rails are reliably prevented, and the cam follower rollers and the elevating guide rollers can be axially supported by a common support shaft, so that the number of parts can be reduced and the system can be constructed inexpensively.

### [BRIEF DESCRIPTION OF THE DRAWINGS]

Fig. 1 is a schematic plan view showing an entire construction of an aisle crossing section;
Fig. 2A is a schematic longitudinal sectional side view showing a state when the conveyance carriage passes through the aisle crossing section, and Fig. 2B is a schematic longitudinal sectional side view showing a state when a crossing aisle is used;
Fig. 3A is a schematic front view showing a conveyance carriage when traveling on a conveyance path, Fig. 3B is a schematic longitudinal sectional front view showing the conveyance carriage when traveling on the aisle crossing section, and Fig. 3C is a schematic longitudinal sectional front view showing a state when the crossing aisle is used;
Fig. 4 is a plan view showing an elevating guide rail at a raised level and an elevating drive device for the elevating guide rail;
Fig. 5 is an enlarged plan view of a main portion of Fig. 4;
Fig. 6 is an enlarged plan view of another main portion of Fig. 4;
Fig. 7A is a side view of a main portion of Fig. 4, and Fig. 7B is a side view of the main portion in a state that the elevating guide rails are switched to the lowered level;
Fig. 8 is an enlarged side view of a main portion of Fig. 7A;
Fig. 9 is an enlarged side view of another main portion of Fig. 7A;
Fig. 10 is an enlarged side view of a main portion of Fig. 7B;
Fig. 11 is an enlarged side view of another main portion of Fig. 7B;
Fig. 12 is a longitudinal sectional front view of a main portion when the elevating guide rails are at the raised level;
Fig. 13 is a longitudinal sectional front view of the main portion when the elevating guide rails are at the lowered level;
Fig. 14 is a longitudinal sectional front view of the main portion when the elevating guide rails are at the raised level and a carriage stopper is in a fallen-down nonworking posture; and
Fig. 15 is a longitudinal sectional front view of the main portion when the elevating guide rails are at the lowered level and the carriage stopper is in a standup working posture.

### [Description of the Reference Numerals]

1: conveyance carriage
2: wheel
3a-3d: vertical axis roller
6: floor surface
7a, 7b: conveyance carriage supporting guide rail
8: conveyance carriage guiding groove-shaped guide rail
12: frictional driving means
13: floor surface aisle
14: aisle crossing section
15: pit
16a, 16b: elevating guide rail
17: aperture
18: floor member
19A, 19B: elevating drive device
20A, 20B: elevating support means
21: drive means
22: plate-shaped movable body
23: cam rail
24, 44: cam follower roller
25: substrate
26: slide guide rail
27: slide block
28, 41: bearing member
29, 42: support shaft
30: elevating guide roller
31: slot
32: elevating guide member
33: elevating guide unit
35: slip member
36: slide guide plate
37: cylinder unit
38: joint rod
39a, 39b: carriage stopper
40a, 40b: mount
45: operating plate
46: switching means

### [Best Mode for Carrying Out the Invention]

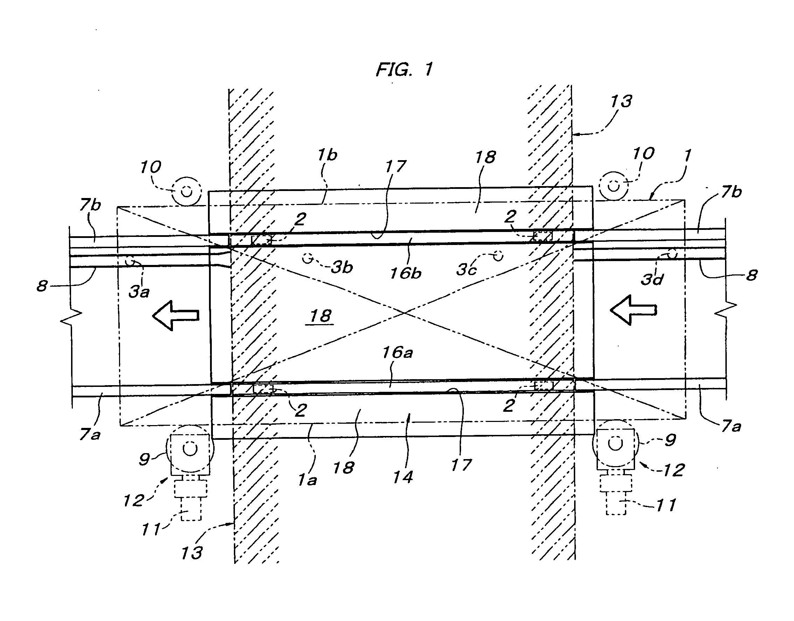

Hereinafter, a detailed embodiment of the present invention will be described with reference to the accompanying drawings. In Fig. 1 through Figs. 3, the reference numeral 1 denotes a conveyance carriage which is provided with two front and rear pairs of left and right wheels 2 on the bottom and four vertical axis rollers 3a through 3d axially supported at appropriate intervals on a straight line parallel to a traveling direction, and an elevating rack 5 at an upper central portion which is supported so as to be elevated by a crosslink mechanism 4. This elevating rack 5 can be elevated by various conventionally known methods such as a motor driving method in which the crosslink mechanism 4 is raised and lowered by a motor-driven screwmechanism or a cam rail method in which the elevating rack 5 is raised by pushing-up elevating cam follower rollers interlocked with rising and lowering movements of the crosslink mechanism 4 by cam rails laid on the floor surface side and the elevating rack 5 is lowered by gravity.

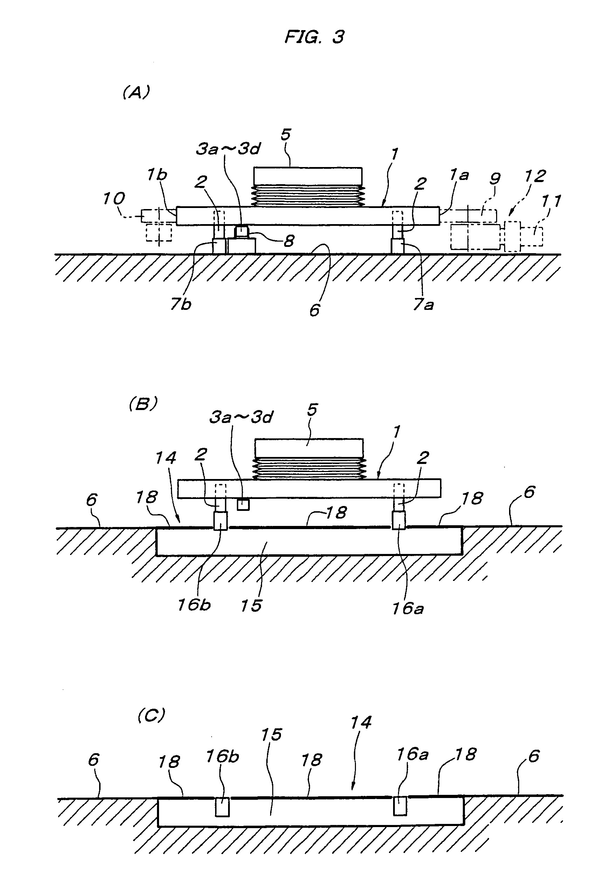

On the traveling path of the conveyance carriage 1, that is, on the floor surface 6 as the conveyance path, a pair of left and right guide rails 7a and 7b which support wheels 2 so as to allow these to roll freely, and conveyance carriage guiding groove-shaped guide rails 8 consisting of a pair of left and right rail members in which four vertical axis rollers 3a through 3d arranged in series fit with play remaining are laid. The four vertical axis rollers 3d through 3d arranged in series are disposed at positions near both front and rear ends and two intermediate positions of the conveyance carriage 1 on an imaginary straight line in the front and rear direction (traveling direction) adjacent to the inner side of left or right wheels 2. The traveling drive method for this conveyance carriage 1 is not especially limited, and for example, as shown by the imaginary lines in Fig. 1 and Fig. 3A, a frictional driving method can be used in which a frictional drive means 12 consisting of a frictional driving roller 9 and a backup roller 10 which sandwich the parallel left and right side surfaces 1a and 1b of the conveyance carriage 1 and a motor 11 which drives and rotates the frictional driving roller 9 is provided at positions at appropriate intervals on the conveyance path.

In the conveyance path of the conveyance carriage 1, an aisle 13 is provided on the floor surface to cross the conveyance path. On this aisle crossing section 14 in the conveyance path, the guide rails 7a and 7b and the conveyance carriage guide rails 8 are not laid. The width of the crossing aisle 13 is shorter than the distance between two vertical axis rollers 3a and 3d on both ends among the four vertical axis rollers 3a through 3d arranged in series but are longer than the distance between the two middle vertical axis rollers 3b and 3c so that, when the conveyance carriage 1 passes through the aisle crossing section 14, fitting with play remaining of only one vertical axis roller 3a at the front end or one vertical axis roller 3d at the rear end among the four vertical axis rollers 3a through 3d arranged in series in the conveyance carriage guiding groove-shaped guide rails 8 is prevented, that is, at least two vertical axis rollers among the four vertical axis rollers 3a through 3d in series always fit with play remaining in either one of the conveyance carriage guiding groove-shaped guide rails 8 before and after the aisle crossing section 14 or fit with play remaining across both conveyance carriage guiding groove-shaped guide rails 8 before and after the aisle crossing section 14.

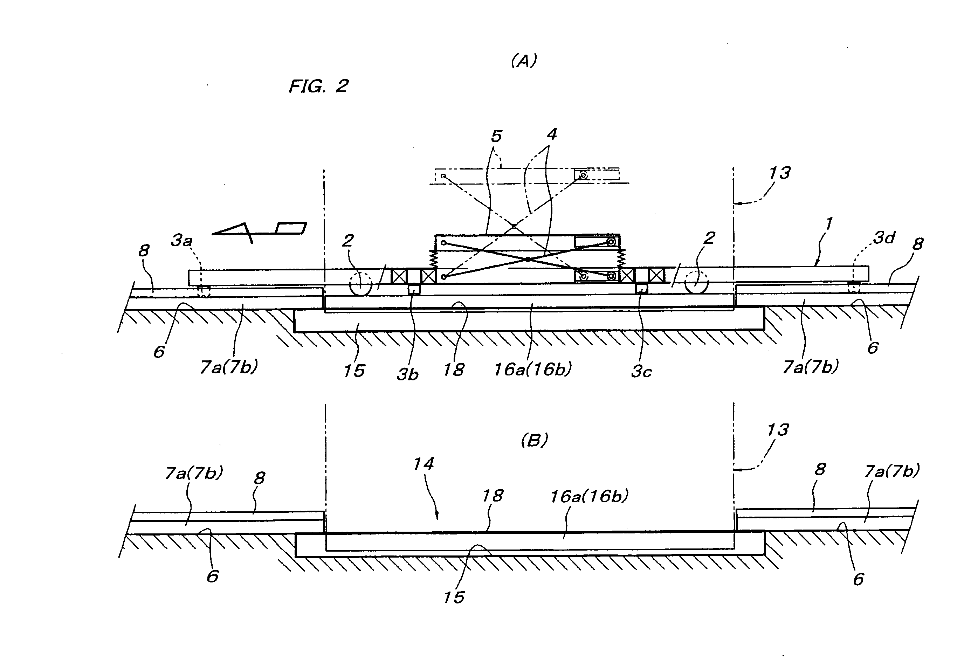

At the aisle crossing section 14 in the conveyance path of the conveyance carriage 1, a pit 15 is provided by digging down into the floor surface 6, and inside this pit 15, elevating guide rails 16a and 16b which connect the guide rails 7a and 7b before and after the aisle crossing section 14 are provided. These elevating guide rails 16a and 16b are constructed so as to freely move vertically parallel between a raised level at which they connect the guide rails 7a and 7b and a lowered level at which the upper surfaces of the elevating guide rails 16a and 16b are flush with the floor surface 6 as shown in Fig. 2A, Fig. 3B, and Fig. 3C. Over the pit 15, a floor member 18 flush with the floor surface 6 is laid via a mount (not shown) while leaving apertures 17 in which the elevating guide rails 16a and 16b move vertically.

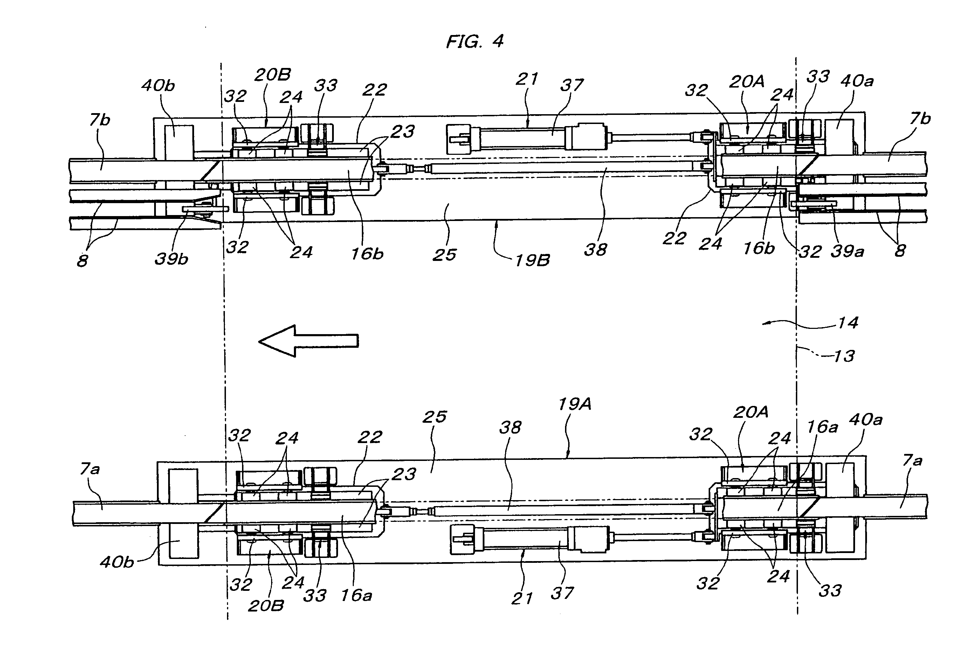

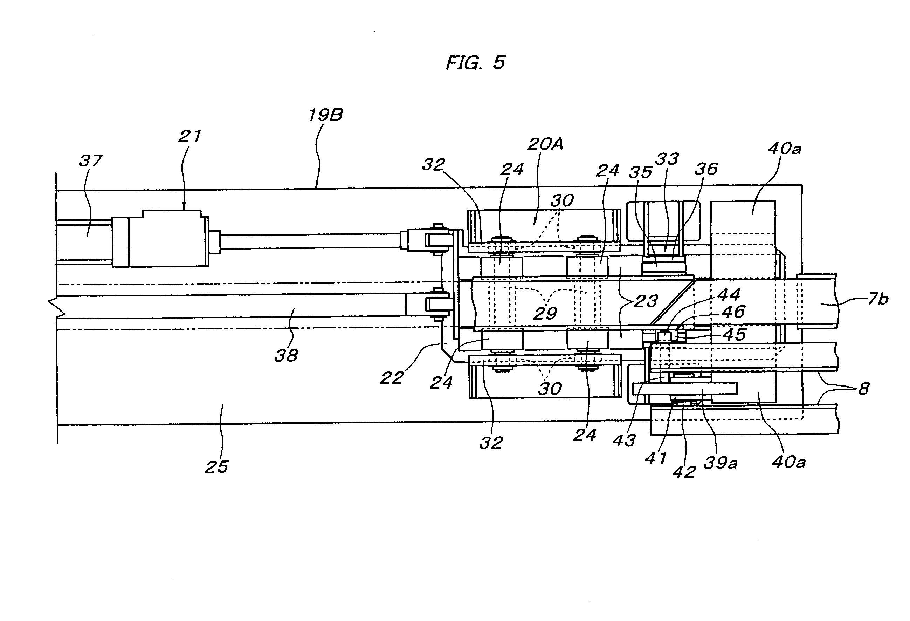

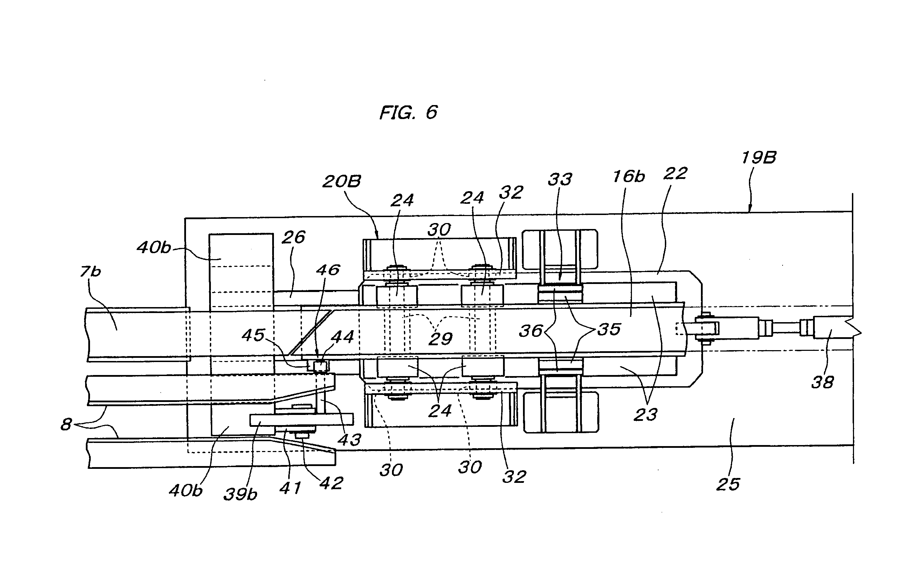

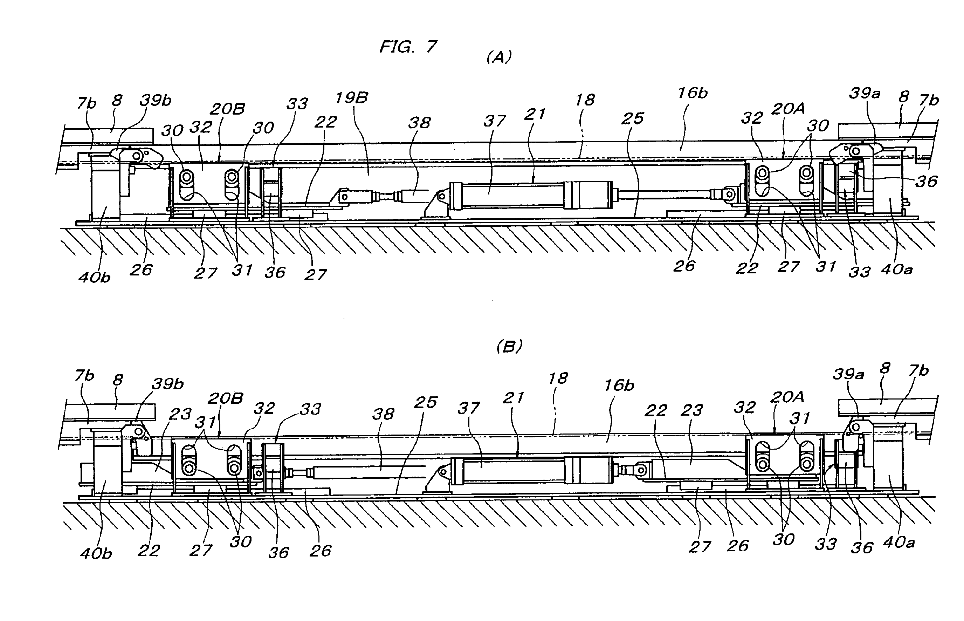

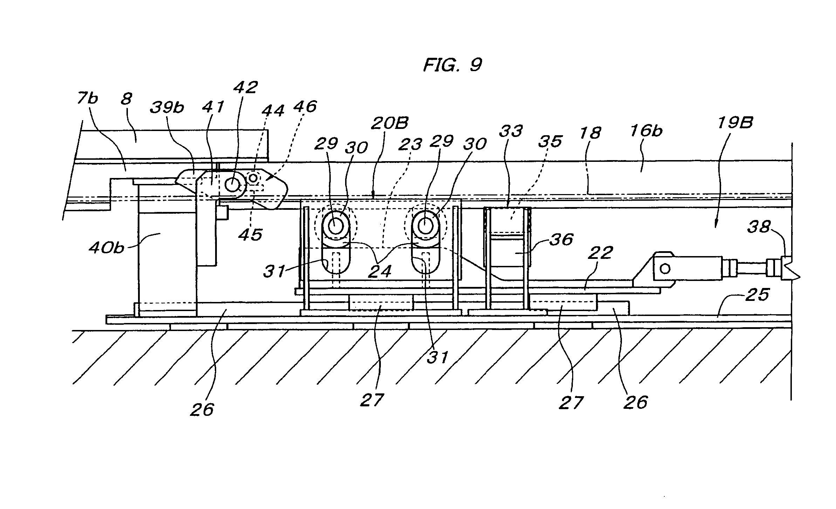

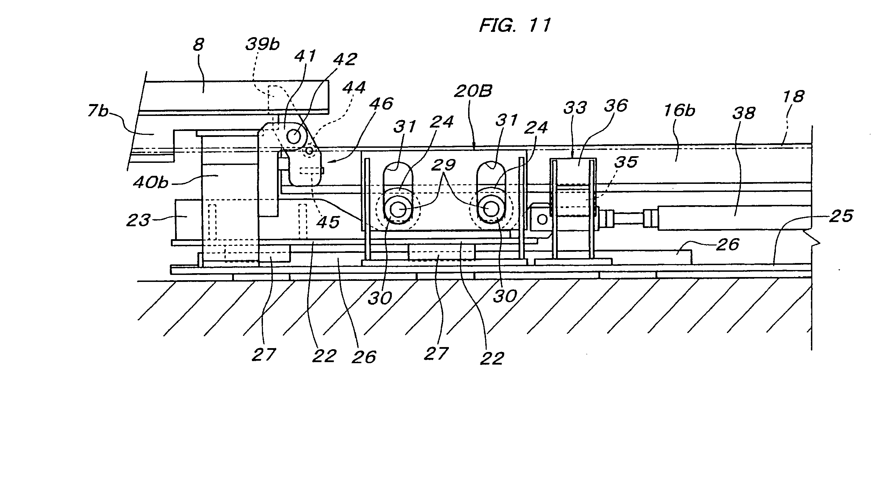

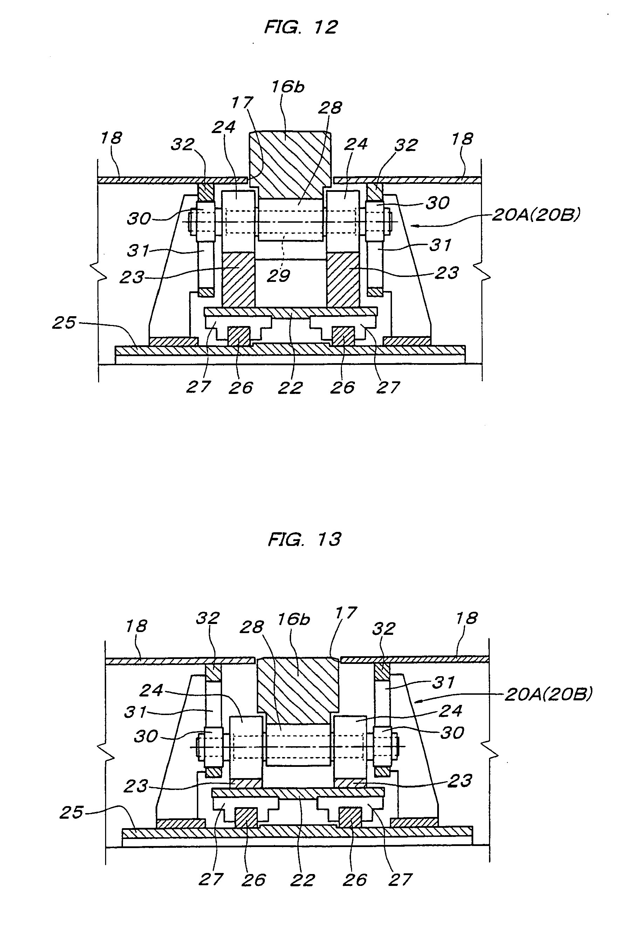

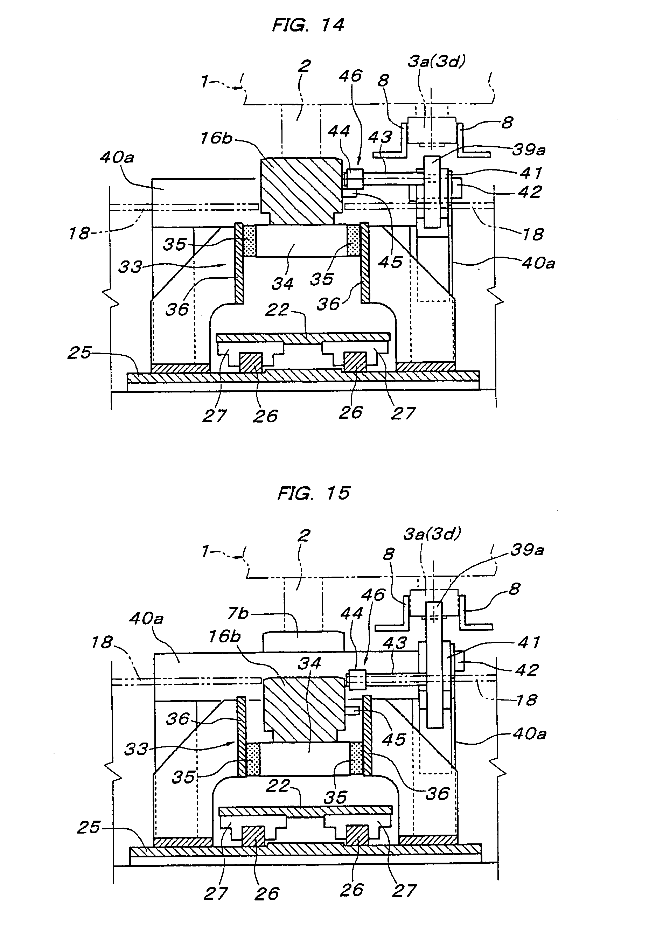

Hereinafter, an embodiment of the elevating drive device of the elevating guide rail 16a, 16b will be described with reference to Fig. 4 through Fig. 13. The elevating drive device 19A of the elevating guide rail 16a and the elevating drive device 19B of the elevating guide rail 16b have the same structure, and Fig. 5 through Fig. 13 show the elevating drive device 19B of the elevating guide rail 16b. These elevating drive devices 19A and 19B include drive means 21 and elevating support means 20A and 20B disposed at two positions near both longitudinal ends of the elevating guide rails 16a and 16b. The elevating support means 20A and 20B have the same structure, and each includes a plate-shaped movable body 22 disposed below the elevating guide rail 16a, 16b, a pair of left and right cam rails 23 provided on the plate-shaped movable body 22, and two front and rear pairs of left and right cam follower rollers 24 placed on the cam rails 23 so as to roll freely. As shown in Fig. 13 and Fig. 14, the plate-shaped movable body 22 is supported on the pair of left and right slide guide rails 26 on a substrate 25 laid on the bottom surface of the pit 15, movably in the longitudinal direction of the elevating guide rail 16a, 16b via slide blocks 27, and the pair of left and right cam rails 23 are disposed parallel to the elevating guide rail 16a, 16b on both left and right sides of the elevating guide rail 16a, 16b, and the pair of left and right cam follower rollers 24 are axially supported by a common support shaft 29 in a horizontal posture on both left and right sides of the bearing member 28 provided below the elevating guide rail 16a, 16b.

On the outer sides of the pair of left and right cam follower rollers 24, elevating guide rollers 30 are axially supported concentrically by using the common support shaft 29 axially supporting the cam follower rollers 24, and a pair of left and right elevating guide members 32 having vertical slots 31 in which the elevating guide rollers 30 fit with play remaining so as to roll and move vertically are attached onto the substrate 25 parallel to the elevating guide rail 16a, 16b on the outer sides of the pair of left and right cam rails 23.

Parallel to the respective elevating support means 20A and 20B, elevating guide units 33 are provided. As shown in Fig. 14 and Fig. 15, these elevating guide units 33 include slip members 35 attached to both left and right sides of the elevating guide rail 16a, 16b via an attaching member attached to the lower side of the elevating guide rail 16a, 16b, and a pair of left and right slide guide plates 36 attached onto the substrate 25 so as to sandwich movably vertically the elevating guide rail 16a, 16b via the pair of left and right slip members 35.

The drive means 21 consists of, as shown in Fig. 4, a cylinder unit 37 which is interposed between the plate-shaped movable body 22 and the substrate 25 of one elevating support means 20A and reciprocates the plate-shaped movable body 22 of the elevating support means 20A, and a joint rod 38 which interlocks and joins the plate-shaped movable body 22 of the elevating support means 20A and the plate-shaped movable body 22 of the other elevating support means 20B.

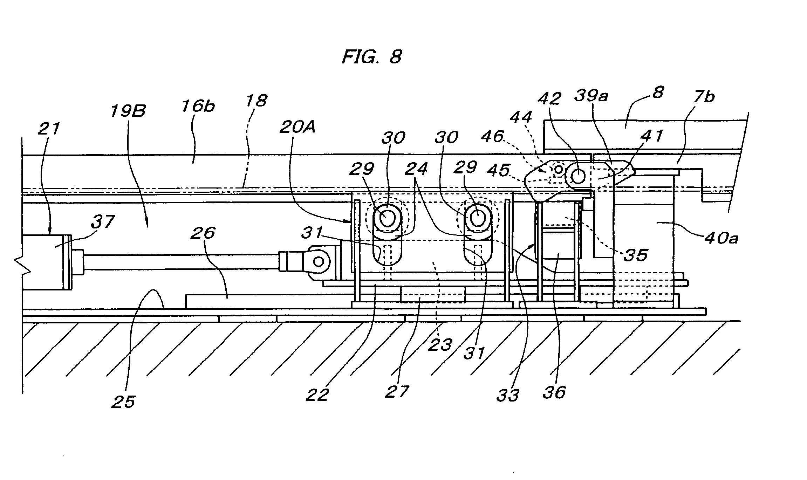

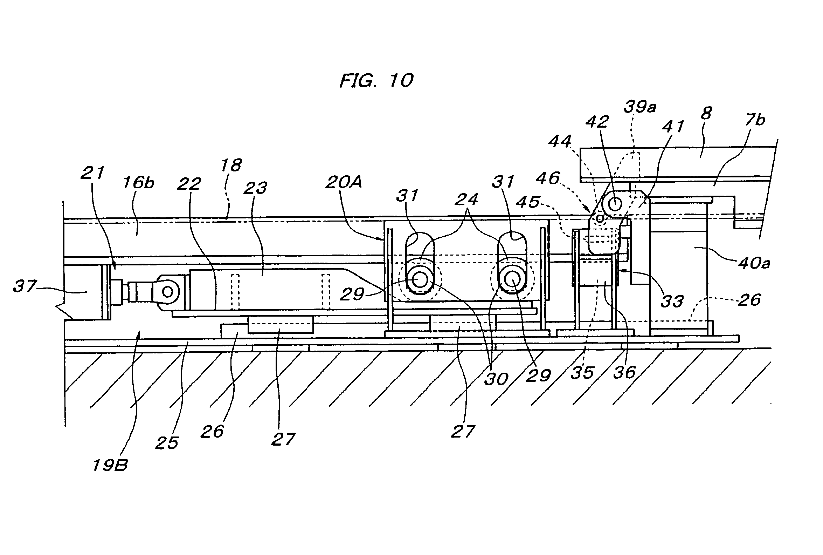

As shown in Fig. 4, the elevating support means 20A and 20B of one elevating drive device 19B are provided with carriage stoppers 39a and 39b parallel. In each elevating drive device 19A, 19B, as shown in Fig. 8 through Fig. 11, mounts 40a and 40b for supporting the ends of the guide rails 7a and 7b adjacent to the elevating guide rails 16a and 16b are stood on the substrates 25, and the carriage stoppers 39a and 39b are axially supported on bearing members 41 attached to the mounts 40a and 40b by support shafts 42 in left and right horizontal postures, and are constructed so as to swing vertically only between a standup working posture (see Fig. 10, Fig. 11, and Fig. 15) in contact with the vertical axis roller 3a (or 3d) moving within the conveyance carriage guiding groove-shaped guide rails 8 parallel to the guide rail 7b and a fallen-down nonworking posture that is fallen in a direction apart from the aisle crossing section 14 with respect to the standup working posture and allows the vertical axis rollers 3a through 3d to pass through (see Fig. 8, Fig. 9, and Fig. 14), and are urged into the standup working posture by gravity or a spring force. Further, as shown in Fig. 14 and Fig. 15, parallel to these carriage stoppers 39a and 39b, switching means 46 is provided. This switching means 46 consists of a cam follower roller 44 axially supported on the carriage stopper 39a, 39b via a projecting support shaft 43 in a left and right horizontal posture projecting to the side of the elevating guide rail 16b from the carriage stopper 39a, 39b, and an operating plate 45 which is attached to the side surface of the elevating guide rail 16a, 16b so as to switch the carriage stopper 39a, 39b from the standup working posture into the fallen-down nonworking posture via the cam follower roller 44 when the elevating guide rail 16b rises to the raised level.

In the above-described construction, the elevating guide rails 16a and 16b are prevented from falling in the left and right lateral direction by sandwiching the portions near both ends in the longitudinal direction by elevating guide units 33, and are prevented from moving in the longitudinal direction and are allowed to move only vertically by fitting, with play remaining, the elevating guide rollers 30 in slots 31 of the elevating guide members 32 of the elevating support means 20A and 20B. The cam rails 23 are formed so that the elevating guide rails 16a and 16b supported by the cam rails 23 move vertically parallel via the cam follower rollers 24 while maintaining their horizontal postures by actuating the cylinder units 37 of the drive means 21 of the elevating drive devices 19A and 19B and moving forward and rearward the cam rails 23 of both front and rear elevating support means 20A and 20B synchronously via the plate-shaped movable bodies 22. Specifically, the cam rail 23 is provided with a low-level horizontal support surface and a high level horizontal support surface for selectively supporting the cam follower roller 24, and according to the movements of the cam rails 23 of both front and rear elevating support means 20A and 20B, the cam follower rollers 24 on the sides of the elevating guide rails 16a and 16b shift from one to the other of the low-level horizontal support surfaces and the high-level horizontal support surfaces of the cam rails 23 simultaneously.

Hereinafter, a usage will be described. Until the conveyance carriage 1 traveling on the conveyance path approaches the aisle crossing section 14, the elevating guide rails 16a and 16b are lowered to the lowered level as shown in Fig. 2B, Fig. 3C, Fig. 7B, Fig. 10, Fig. 11, Fig. 13, and Fig. 15. Specifically, the cam rails 23 of both front and rear elevating support means 20A and 20B of the elevating drive devices 19A and 19B are slid to the downstream side of the aisle crossing section 14 by the drive means 21 (cylinder units 37) and switched into a state that the low-level horizontal support surfaces of the cam rails 23 support the cam follower rollers 24. As a result, the elevating guide rails 16a and 16b lower from the raised level to the lowered level, and the upper surfaces of the elevating guide rails 16a and 16bbecome flush with the surface of the floormember 18 covering the pit 15, that is, the floor surface 6. In this state, the upper surface of the aisle crossing section 14 becomes a flat surface flush with the floor surface 6 of the crossing aisle 13, so that a handcart, etc., can be safely and smoothly moved on the crossing aisle 13.

In the state that the elevating guide rails 16a and 16b are switched to the lowered level as described above, as shown in Fig. 10, Fig. 11, and Fig. 15, the operating plates 45 of the switching means 46 of the carriage stoppers 39a and 39b are lowered together with the elevating guide rails 16a and 16b and spaced downward from the cam follower rollers 44 of the carriage stoppers 39a and 39b, so that these carriage stoppers 39a and 39b are switched into a standup working posture by the urging force. Therefore, even if the conveyance carriage 1 is made to enter the aisle crossing section 14 by mistake in the state that the elevating guide rails 16a and 16b are lowered to the lowered level as described above, the forefront vertical axis roller 3a among the vertical axis rollers 3a through 3d of the conveyance carriage 1 is received by the carriage stopper 39a, 39b entering inside the terminal end of the conveyance carriage guiding groove-shaped guide rail 8 and the conveyance carriage 1 is prevented from entering the aisle crossing section 14. When the traveling direction of the conveyance carriage 1 is limited to one direction, only the carriage stopper 39a on the upstream side of the aisle crossing section 14 may be provided.

When the conveyance carriage 1 traveling reaches a point at a predetermined distance to the aisle crossing section 14, the drive means 21 (cylinder units 37) of the elevating drive devices 19A and 19B is actuated to slide the cam rails 23 to the upstream side of the aisle crossing section 14 as shown in Fig. 2A, Fig. 3B, Fig. 4 through Fig. 6, Fig. 7A, Fig. 8, Fig. 9, Fig. 12, and Fig. 14 via the plate-shaped movable bodies 22 of both front and rear elevating support means 20A and 20B, whereby the elevating guide rails 16a and 16b are raised to the raised level from the lowered level. Specifically, switching is made into a state that the low-level horizontal support surfaces of the cam rails 23 of both front and rear elevating support means 20A and 20B support the cam follower rollers 24. As a result, the elevating guide rails 16a and 16b raised from the apertures 17 of the floor member 18 covering the pit 15 connect the guide rails 7a and 7b before and after the aisle crossing section 14 at the same level, and simultaneously, as shown in Fig. 8, Fig. 9, and Fig. 14, the operating plates 45 of the switching means 46 of the carriage stoppers 39a and 39b rise together with the elevating guide rails 16a and 16b and push up the cam follower rollers 44 of the carriage stoppers 39a and 39b, so that the carriage stoppers 39a and 39b are switched into a fallen-down nonworking posture and withdraw downward from the movement path of the vertical axis rollers 3a through 3d of the conveyance carriage 1. Therefore, the wheels 2 of the conveyance carriage 1 roll and move to the guide rails 7a and 7b on the downstream side of the aisle crossing section 14 through the elevating guide rails 16a and 16b at the raised level from the guide rails 7a and 7b on the upstream side of the aisle crossing section 14, and accordingly, the conveyance carriage 1 can pass through the aisle crossing section 14 without problems. At this time, as described above, at least two vertical axis rollers among the four vertical axis rollers 3a through 3d of the conveyance carriage 1 always fits, with play remaining, in the conveyance carriage guiding groove-shaped guide rails 8 before and after the aisle crossing section 14 when moving, so that the conveyance carriage 1 passing through the aisle crossing section 14 reliably travels straight, and there is no possibility that the orientation of the conveyance carriage 1 unexpectedly changes during passing through the aisle crossing section 14 and the wheels 2 come out of and fall off the elevating guide rails 16a and 16b and the guide rails 7a and 7b on the downstream side of the aisle crossing section 14 and the vertical axis rollers 3a through 3d do not fit in the conveyance carriage guiding groove-shaped guide rail 8 on the downstream side of the aisle crossing section 14 and come out of it.

When the conveyance carriage 1 is a type that is propelled by the frictional driving means 12, as shown by the imaginary lines in Fig. 1, the frictional drive means 12 is disposed front and rear adjacent to the aisle crossing section 14 so that the conveyance carriage 1 to be sent into the aisle crossing section 14 by the frictional drive means 12 on the upstream side of the aisle crossing section 14 is propelled successively by the frictional drive means 12 on the downstream side of the aisle crossing section 14 before separating from the frictional drive means 12 on the upstream side. Before the aisle crossing section 14, by providing the frictional drive means 12 which can temporarily stop the traveling conveyance carriage 1 and send it out to the aisle crossing section 14 at an arbitrary timing, the crossing aisle 13 can be used by temporarily stopping the conveyance carriage 1 before the aisle crossing section 14 and lowering the elevating guide rails 16a and 16b to the lowered level only when a vehicle, etc. , passes through the crossing aisle 13.

In the illustrated embodiment, a wide pit 15 covering the entire aisle crossing section 14 is provided, however, it is also allowed that two narrow and long pits for housing only the elevating guide rails 16a and 16b and the elevating drive devices 19A and 19B separately are formed. It is also allowed that the cam follower rollers 24 are axially supported on the plate-shaped movable bodies 22 and the cam rails 23 are laid below the elevating guide rails 16a and 16b.

### [Industrial Applicability]

The carriage-type conveyance system according to the present invention can be used as a car body conveyance system in a car assembly line for attaching various parts to a car body while conveying the car body.

## Claims

1. A carriage-type conveyance system comprising:
a conveyance path formed by guide rails (7a and 7b) laid on a floor surface,
a conveyance carriage (1) which travels on the guide rails (7a and 7b),
an aisle crossing section (14) where an aisle (13) on the floor surface crosses the conveyance path,
a pit (15),
elevating guide rails (16a and 16b), and
elevating drive devices (19A and 19B), wherein
the pit (15) is formed by digging down into the floor surface (6) of the aisle crossing section (14) and is covered by a floor member (18) laid to be flush with the floor surface (6),
the elevating guide rails (16a and 16b) are disposed inside the pit (15) movably vertically parallel between a raised level at which they connect the guide rails (7a and 7b) before and after the pit (15) and a lowered level at which their upper surfaces are flush with the floor surface (6),
the elevating drive devices (19A and 19B) elevate the elevating guide rails (16a and 16b) between the raised level and the lowered level, and
elevating apertures (17) for the elevating guide rails (16a and 16b) are made in the floor member (18),
**characterized in that**
in the conveyance path, a carriage stopper (39a) and a switching means (46) are provided in parallel,
the carriage stopper (39a) is provided on at least the upstream side of the conveyance carriage traveling direction of the aisle crossing section (14), and is freely switched between a working posture in which the carriage stopper stops the conveyance carriage (1) before the elevating guide rail (16a, 16b) and a nonworking posture in which it allows the conveyance carriage (1) to pass through, and
the switching means (46) switches the carriage stopper (39a) into the working posture only when the elevating guide rail (16a, 16b) is at the lowered level in conjunction with the vertical movements of the elevating guide rail, and
the carriage stopper (39a) is axially supported and is constructed so as to swing vertically only between a standup working posture and a non-working posture, and is urged into the standup working posture by gravity or a spring force, and
the switching means (46) consists of a cam follower roller (44) provided with the carriage stopper (39a) and an operating plate (45) which is attached to the elevating guide rail (16a, 16b) so as to switch the carriage stopper (39a) from the standup working posture into the fallen-down non-working posture via the cam follower roller (44) when the elevating guide rail (16a, 16b) rises to the raised level.

2. The carriage-type conveyance system according to Claim 1, wherein
the conveyance carriage (1) is provided with at least four guided portions (3a through 3d) at appropriate intervals in the traveling direction, and
on the conveyance paths before and after the aisle crossing section (14), conveyance carriage guide rails (8) which engage with the guided portions (3a through 3d) are laid so that at least two of the guided portions (3a through 3d) always engage with the conveyance carriage guide rails (8) when the conveyance carriage (1) passes through the aisle crossing section (14).

3. The carriage-type conveyance system according to Claim 1, wherein
the elevating drive devices (19A and 19B) are constituted by elevating support means (20A and 20B) and drive means (21),
the elevating support means (20A and 20B) is disposed at least at two positions before and after the elevating guide rails (16a and 16b) in the longitudinal direction, and is constituted each by cam rails (23) provided on either a movable body (22) movable in the longitudinal direction of the corresponding elevating guide rail (16a, 16b) below the elevating guide rail (16a, 16b) or the elevating guide rail (16a, 16b), and a cam follower roller (24) provided on the other, and
the drive means (21) is constructed so as to reciprocate the movable bodies (22) of the elevating support means (20A and 20B) in conjunction with each other.

4. The carriage-type conveyance system according to Claim 3, wherein
the elevating guide rail (16a, 16b) is provided with an elevating guide unit (33) parallel,
a pair of left and right cam follower rollers (24) are axially supported concentrically on both left and right sides of the elevating guide rail (16a, 16b),
the elevating guide unit (33) is provided at least two positions before and after in the longitudinal direction of the elevating guide rail (16a, 16b), and has a pair of left and right slide guides (36) sandwiching the elevating guide rail (16a, 16b) ,
each elevating support means (20A, 20B) is provided with elevating guide rollers (30) and elevating guide members (32),
the pair of elevating guide rollers (30) are axially supported on the left and right concentrically with the cam follower rollers (24) on the outer sides of the pair of left and right cam follower rollers (24),
the pair of left and right elevating guide members (32) are provided parallel so that the pair of left and right guide rollers (30) engage with these movably vertically,
the movable body (22) is disposed between the pair of left and right elevating guide members (32), and
on the movable body (22), a pair of left and right cam rails (23) which support the pair of left and right cam follower rollers (24), respectively, are laid.

## Patentansprüche

1. Wagenartiges Fördersystem mit:
einer Förderbahn, die durch, auf einer Bodenfläche ausgelegte Führungsschienen (7a und 7b) ausgebildet ist,
einem Förderwagen (1), der sich auf den Führungsschienen (7a und 7b) bewegt,
einem Gangkreuzungsabschnitt (14), an dem ein Gang (13) auf der Bodenfläche die Förderbahn kreuzt,
einem Schacht (15),
Hebeführungsschienen (16a und 16b), und
Hebeantriebseinrichtungen (19A und 19B), wobei
der Schacht (15) durch Graben in die Bodenfläche (6) des Gangkreuzungsabschnitts (14) ausgebildet ist und durch ein Bodenelement (18) bedeckt ist, das so ausgelegt ist, dass es bündig mit der Bodenfläche (6) ist,
die Hebeführungsschienen (16a und 16b) in dem Schacht (15) vertikal parallel beweglich zwischen einem angehobenen Niveau, auf dem sie sich vor und hinter dem Schacht (15) mit den Führungsschienen (7a und 7b) verbinden und einem abgesenkten Niveau angeordnet sind, auf dem ihre oberen Flächen bündig mit der Bodenfläche (6) sind, und
die Hebeantriebseinrichtungen (19A und 19B) die Hebeführungsschienen (16a und 16b) zwischen dem angehobenen Niveau und dem abgesenkten Niveau heben, und
Hebeöffnungen (17) für die Hebeführungsschienen (16a und 16b) in dem Bodenelement (18) ausgeführt sind,
**dadurch gekennzeichnet, dass**
in der Förderbahn, ein Wagenanschlag (39a) und eine Schalteinrichtung (46) parallel vorgesehen sind,
der Wagenanschlag (39a) zumindest an der stromaufwärtigen Seite des Gangkreuzungsabschnitts (14) in der Bewegungsrichtung des Förderwagens vorgesehen ist und frei zwischen einer Arbeitsstellung, in welcher der Wagenanschlag den Förderwagen (1) vor der Hebeführungsschiene (16a, 16b) sperrt und einer Nicht-Arbeitsstellung, in der er es dem Förderwagen (1) gestattet zu passieren, schaltbar ist,
die Schalteinrichtung (46) den Wagenanschlag (39a) nur dann in die Arbeitsstellung schaltet, wenn sich die Hebeführungsschiene (16a, 16b) in Verbindung mit den vertikalen Bewegungen der Hebeführungsschiene (16a, 16b) auf dem abgesenkten Niveau befindet, und
der Wagenanschlag (39a) axial gehalten ist und derart aufgebaut ist, dass er vertikal nur zwischen einer aufrechten Arbeitsstellung und einer Nicht-Arbeitsstellung klappt und durch Gravitation oder eine Federkraft in die aufrechte Arbeitsstellung gezwungen wird, und
die Schalteinrichtung (46) aus einer Nockenabnehmerrolle (44), die mit dem Wagenanschlag (39a) versehen ist und einer Betätigungsplatte (45) besteht, die derart an der Hebeführungsschiene (16a, 16b) angebracht ist, dass sie den Wagenanschlag (39a) mittels der Nockenabnehmerrolle (44) von der aufrechten Arbeitsstellung in die eingeklappte Nicht-Arbeitsstellung schaltet, wenn sich die Hebeführungsschiene (16a, 16b) auf das angehobene Niveau hebt.

2. Wagenartiges Fördersystem nach Anspruch 1, wobei
der Förderwagen (1) mit zumindest vier geführten Abschnitten (3a bis 3d) an geeigneten Intervallen in der Bewegungsrichtung versehen ist,
auf den Förderbahnen vor und hinter dem Gangkreuzungsabschnitt (14), Förderwagenführungsschienen (8), die mit den geführten Abschnitten (3a bis 3d) in Eingriff kommen, so gelegt sind, dass zumindest zwei der geführten Abschnitte (3a bis 3d) immer mit den Förderwagenführungsschienen (8) in Eingriff kommen, wenn der Förderwagen (1) den Gangkreuzungsabschnitt (14) durchläuft.

3. Wagenartiges Fördersystem nach Anspruch 1, wobei
die Hebeantriebseinrichtungen (19A und 19B) durch eine Hebehalteeinrichtung (20A und 20B) und eine Antriebseinrichtung (21) aufgebaut sind,
die Hebehalteeinrichtung (20A bzw. 20B) an zumindest zwei Positionen vor und hinter den Hebeführungsschienen (16a, 16b) in Längsrichtung angeordnet ist und jeweils durch Nockenschienen (23), die entweder an einem beweglichen Körper (22), der in einer Längsrichtung der entsprechenden Hebeführungsschiene (16a, 16b) unter der Hebeführungsschiene (16a, 16b) beweglich ist oder der Hebeführungsschiene (16a, 16b) vorgesehen sind und einer Nockenabnehmerrolle (24) aufgebaut ist, die an dem anderen vorgesehen ist, und
die Antriebseinrichtung (21) derart ausgebildet ist, dass sie die beweglichen Körper (22) der Hebehalteinrichtung (20A und 20B) in Verbindung miteinander hin und her bewegt.

4. Wagenartiges Fördersystem nach Anspruch 3, wobei
die Hebeführungsschiene (16a, 16b) mit einer Hebeführungseinheit (33) parallel versehen ist,
ein Paar linker und rechter Nockenabnehmerrollen (24) axial konzentrisch sowohl an linken und rechten Seiten der Hebeführungsschiene (16a, 16b) gehalten sind,
die Hebeführungseinheit (33) zumindest zwei Positionen davor und dahinter in der Längsrichtung der Hebeführungsschiene (16a, 16b) vorgesehen ist und ein Paar von linken und rechten Gleitführungen (36), welche die Hebeführungsschiene (16a, 16b) dazwischen einschließen, aufweist,
jede Hebehalteeinrichtung (20A, 20B) mit Hebeführungsrollen (30) und Hebeführungselementen (32) versehen ist,
das Paar Hebeführungsrollen (30) axial rechts und links, konzentrisch mit den Nockenabnehmerrollen (24) an den Außenseiten des Paares linker und rechter Nockenabnehmerrollen (24) gehalten ist,
das Paar linker und rechter Hebeführungselemente (32) so parallel vorgesehen ist, dass das Paar linker und rechter Führungsrollen (30) mit diesen vertikal beweglich in Eingriff kommt,
der bewegliche Körper (22) zwischen dem Paar linker und rechter Hebeführungselemente (32) angeordnet ist, und
auf dem beweglichen Körper (22), ein Paar linker und rechter Nockenschienen (23), welche das Paar linker bzw. rechter Nockenabnehmerrollen (24) halten, gelegt ist.

## Revendications

1. Système de transport de type chariot comprenant :
un chemin de transport formé par des rails de guidage (7a et 7b) disposés sur une surface de plancher,
un chariot de transport (1) qui se déplace sur les rails de guidage (7a et 7b),
une section de croisement d'allée (14) où une allée (13) sur la surface de plancher croise le chemin de transport,
une fosse (15),
des rails de guidage de levage (16a et 16b), et
des dispositifs d'entraînement de levage (19A and 19B), où
la fosse (15) est formée en creusant dans la surface de plancher (6) de la section de croisement d'allée (14) et est recouverte par un élément de plancher (18) disposé de manière à affleurer la surface de plancher (6),
les rails de guidage de levage (16a et 16b) sont disposés en parallèle de manière verticalement mobile à l'intérieur de la fosse (15) entre un niveau surélevé auquel ils relient les rails de guidage (7a and 7b) devant et derrière la fosse (15) et un niveau abaissé auquel leurs surfaces supérieures affleurent la surface de plancher (6),
les dispositifs d'entraînement de levage (19A et 19B) élèvent les rails de guidage de levage (16a et 16b) entre le niveau surélevé et le niveau abaissé, et
des ouvertures de levage (17) pour les rails de guidage de levage (16a et 16b) sont formées dans l'élément de plancher (18),
**caractérisé en ce que**
dans le chemin de transport, une butée de chariot (39a) et un moyen de commutation (46) sont prévus en parallèle,
la butée de chariot (39a) est prévue sur au moins le côté amont de la direction de déplacement de chariot de transport de la section de croisement d'allée (14), et commute librement entre une posture de travail dans laquelle la butée de chariot arrête le chariot de transport (1) devant les rails de guidage de levage (16a et 16b) et une posture de repos dans laquelle elle permet au chariot de transport (1) de passer à travers celle-ci, et
le moyen de commutation (46) commute la butée de chariot (39a) vers la position de travail uniquement lorsque le rail de guidage de levage (16a, 16b) est au niveau abaissé conjointement avec les mouvements verticaux des rails de guidage de levage, et
la butée de chariot (39a) est supportée axialement et est construite de manière à osciller verticalement uniquement entre une posture de travail droite et une posture de repos, et est sollicitée dans la posture de travail droite par gravité ou par une force de ressort, et
le moyen de commutation (46) est constitué d'un galet suiveur de came (44) doté de la butée de chariot (39a) et d'une plaque de fonctionnement (45) qui est fixée sur le rail de guidage de levage (16a, 16b) de manière à faire commuter la butée de chariot (39a) de la posture de travail droite à la posture de repos tombante par l'intermédiaire du galet suiveur de came (44) lorsque le rail de guidage de levage (16a, 16b) s'élève au niveau surélevé.

2. Système de transport de type chariot selon la revendication 1, dans lequel
le chariot de transport (1) est doté d'au moins quatre parties guidées (3a à 3d) à des intervalles appropriés dans la direction de déplacement, et
sur les chemins de transport devant et derrière la section de croisement d'allée (14), les rails de guidage de chariot de transport (8) qui se mettent en prise avec les parties guidées (3a à 3d) sont disposés de sorte qu'au moins deux parmi les parties guidées (3a à 3d) se mettent toujours en prise avec les rails de guidage de chariot de transport (8) lorsque le chariot de transport (1) passe à travers la section de croisement d'allée (14).

3. Système de transport de type chariot selon la revendication 1, dans lequel
les dispositifs d'entraînement de levage (19A et 19B) sont constitués par des moyens de support de levage (20A et 20B) et un moyen d'entraînement (21),
les moyens de support de levage (20A and 20B) sont disposés au moins à deux positions devant et derrière les rails de guidage de levage (16a et 16b) dans la direction longitudinale, et sont constitués chacun par des rails de came (23) prévus sur l'un ou l'autre parmi un corps mobile (22), pouvant se déplacer dans la direction longitudinale du rail de guidage de levage correspondant (16a, 16b) en dessous du rail de guidage de levage (16a, 16b) ou le rail de guidage de levage (16a, 16b), et un galet suiveur de came (24) prévu sur l'autre, et
le moyen d'entraînement (21) est construit de manière à animer les corps mobiles (22) des moyens de support de levage (20A et 20B) d'un mouvement de va-et-vient ensemble.

4. Système de transport de type chariot selon la revendication 3, dans lequel
le rail de guidage de levage (16a, 16b) est doté d'une unité de guidage de levage (33) parallèle,
une paire de galets suiveurs de came gauche et droit (24) sont supportés axialement de manière concentrique sur les deux côtés gauche et droit du rail de guidage de levage (16a, 16b),
l'unité de guidage de levage (33) est prévue à au moins deux positions avant et arrière dans la direction longitudinale du rail de guidage de levage (16a, 16b), et a une paire de guides coulissants gauche et droit (36) prenant en tenaille le rail de guidage de levage (16a, 16b),
chaque moyen de support de levage (20A, 20B) est doté de galets de guidage de levage (30) et d'éléments de guidage de levage (32),
la paire de galets de guidage de levage (30) sont supportés axialement à gauche et à droite de manière concentrique avec les galets suiveurs de came (24) sur les côtés extérieurs de la paire de galets suiveurs de came gauche et droit (24),
la paire d'éléments de guidage de levage gauche et droit (32) sont prévus en parallèle de sorte que la paire de galets de guidage gauche et droit (30) se mettent en prise avec ceux-ci de manière verticalement mobile,
le corps mobile (22) est disposé entre la paire d'éléments de guidage de levage gauche et droit (32), et
sur le corps mobile (22), sont disposés une paire de rails de came gauche et droit (23) qui supportent la paire de galets suiveurs de cames gauche et droit (24), respectivement.
